(19) **Europäisches Patentamt**
**European Patent Office**
**Office européen des brevets**

(11) **EP 4 265 367 A1**

(12) **EUROPEAN PATENT APPLICATION**
published in accordance with Art. 153(4) EPC

(43) Date of publication:
**25.10.2023 Bulletin 2023/43**

(21) Application number: **21906956.4**

(22) Date of filing: **07.12.2021**

(51) International Patent Classification (IPC):
**B23K 26/242** (2014.01)     **B23K 35/30** (2006.01)
**B23K 35/02** (2006.01)     **C22C 38/00** (2006.01)
**C22C 38/02** (2006.01)     **C22C 38/04** (2006.01)
**C22C 38/06** (2006.01)     **C22C 38/14** (2006.01)
**C22C 38/58** (2006.01)

(52) Cooperative Patent Classification (CPC):
**B23K 35/3053; B23K 9/025; B23K 9/173;**
**B23K 9/23; B23K 35/02; B23K 35/0261;**
**B23K 35/30; B23K 35/38; C22C 38/00;**
**C22C 38/02; C22C 38/04; C22C 38/06;**
**C22C 38/14; C22C 38/58;** B23K 2101/006;   (Cont.)

(86) International application number:
**PCT/KR2021/018413**

(87) International publication number:
**WO 2022/131652 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020   KR 20200178320**

(71) Applicant: **POSCO**
**Pohang-si, Gyeongsangbuk-do 37859 (KR)**

(72) Inventors:
• **BAE, Gyu-Yeol**
**Incheon 21985 (KR)**
• **LEE, Sang-Min**
**Incheon 21985 (KR)**

(74) Representative: **Meissner Bolte Partnerschaft
mbB**
**Patentanwälte Rechtsanwälte**
**Postfach 86 06 24**
**81633 München (DE)**

(54) **WELDED MEMBER HAVING EXCELLENT FATIGUE STRENGTH OF WELDED PORTION AND METHOD FOR MANUFACTURING SAME**

(57)     One embodiment of the present invention relates to a welded member obtained by overlapping portions of two sheets of base metal and performing fillet welding thereon using weld material, and provides a welded member having excellent fatigue strength of welded portion, and a method for manufacturing same, the welded member comprising base metal, a weld bead and root-reinforcing weld metal, wherein the base metal has a tensile strength of 780 MPa, the weld bead has a toe angle of 160 degrees or greater and the weld bead and the root-reinforcing weld metal have a Vicker's hardness of 280-320 Hv and a fatigue strength of 350 MPa or higher.

Fig. 1

(a)

Fig. 1

(b)

(52) Cooperative Patent Classification (CPC): (Cont.)
B23K 2101/18; B23K 2103/04

**Description**

Technical Field

The present disclosure relates to a welded member having excellent welded portion fatigue strength and method of manufacturing the same.

Background Art

In the automobile field, research into lightweight technology for car bodies and parts is emerging as a major issue due to fuel efficiency regulation policies, in accordance with environmental protection for issues such as global warming. Chassis parts, important for automobile driving performance, also require the application of a high-strength steel material for weight reduction, in accordance with this principle. In order to achieve the weight reduction of such parts, it is essential to increase the strength of materials, and it is an important factor to guarantee durability of parts made of high-strength steel materials in an environment in which repeated fatigue loads are applied. In the case of arc welding, which is mainly used to secure strength when assembling automobile chassis parts, since overlap joint welding is performed between parts by welding of a welding wire, it is inevitable to provide a joint portion with a geometric shape. However, since this acts as a repetitive fatigue stress concentration portion (notch effect) and becomes a fracture initiation point, resulting in deterioration of durability performance of the parts, there is a limitation in which an advantage of applying high-strength steel materials is lost. As described above, for fatigue characteristics of a welded portion, the most important thing is to reduce an angle (toe angle) of an end portion of a bead, which is mainly a stress concentration portion, and it has been reported that there is no direct correlation with softening of a heat-affected zone (HAZ) due to heat input from welding.

Meanwhile, as a representative technique for solving such a problem, there is provided Patent Document 1. In Patent Document 1, a concept of material control for each temperature section of a toe portion of a weld bead, that is, a heat-affected zone (HAZ), in order to improve fatigue characteristics of an arc welded portion of a steel material having a plate thickness of 5 mm or less and tensile strength of 780 MPa or more(for example, a position of minimum hardness at a depth of 0.1 mm on a surface must be at least 0.3 mm away from a melting line), but the details of a specific welding method that can improve the fatigue characteristics by reducing a weld bead toe angle are insufficient.

As another technique, there are provided Patent Documents 2 and 3. Patent Document 2 suggests that fatigue characteristics may be improved by applying compressive stress by continuously hitting an end portion of a weld bead with a chipper (striking pin) to form a plastic deformation region, and Patent Document 3 discloses a re-melting treatment method of the end portion of the weld bead through a plasma heat source after welding in order to reduce a toe angle of an arc weld bead between a sub-frame and a bracket, which are chassis parts for automobiles. However, the above-proposed methods have an unavoidable limitation in that a process cost may increase when manufacturing parts because a post-welding process is added.

As another technique, there is provided Patent Document 4. Patent Document 4 suggests a welded member that can secure excellent fatigue strength without special post-processing treatment such as laser re-melting after welding, but has a disadvantage that a level of fatigue strength is merely at a level of up to 285 MPa.

[Prior art Document]

(Patent Document 1) Japanese Patent Laid-Open No. 2013-220431
(Patent Document 2) Japanese Patent Laid-Open No. 2014-014831
(Patent Document 3) Japanese Patent Laid-Open No. 2014-004609
(Patent Document 4) Korean Patent Publication No. 10-2019-0103244

Summary of Invention

Technical Problem

An aspect of the present disclosure is to provide a welded member having excellent welded portion fatigue strength and method of manufacturing the same.

Solution to Problem

According to an aspect of the present disclosure, a welded member is obtained by overlapping a portion of two base materials and performing fillet welding using a welding material, the welded member having excellent welded portion fatigue strength thereof, the welded member including: a base material, a weld bead and reinforcing welding metal of a root portion, wherein the base material has a tensile strength of 780 MPa or more, the weld bead has a toe angle of 160° or more, and the weld bead and reinforcing welding metal in the root portion have an average Vickers hardness of 280 to 320 Hv and an average fatigue strength of 350 MPa or more.

According to another aspect of the present disclosure, a method for manufacturing a welded member obtained by overlapping a portion of two base materials and performing fillet welding using a welding material, the welded member having excellent welded portion fatigue strength thereof, in the method, wherein the base material has a tensile strength of 780 MPa or more, during the welding, a protective gas containing, by volume %, 5 to 10% of $CO_2$ and a remainder of Ar is used, during the welding, a welding heat input (Q) defined by the following [Equation 1] satisfies $1.15t \leq Q \leq 1.6t$ (where, t is a thickness of a base material (mm), and an unit of Q is kJ/cm), the welding material has specific resistance (R) defined by the following [Equation 2] satisfies $0.5 \leq R \leq 1.1$, and X defined by the following [Equation 3] satisfies $0.6 \leq X \leq 3.4$,

$$[Equation\ 1]\ Q = (I \times E) \times 0.048 / u$$

$$[Equation\ 2]\ R = [Si] + 0.25 \times ([Mn] + [Cr])$$

$$[Equation\ 3]\ X = 28 \times [Si] / [Mn]^2 - [Cr] / 3 + 4 \times [Mo]$$

(however, in the [Equation 1], I, E, and u represent a welding current [A], a welding voltage [V], and a welding speed (cm/min), respectively, and in the [Equation 2] and [Equation 3], and [Si], [Mn], [Cr] and [Mo] represent each element content (wt%)).

Advantageous Effects of Invention

According to an aspect of the present disclosure, it is possible to provide a welded member having excellent welded portion fatigue strength and method of manufacturing the same.

Brief Description of Drawings

FIG. 1 is a photograph captured with an optical microscope after etching a cross-sectional structure of a welded member according to an embodiment of the present disclosure with a nital solution, FIG. 1(a) is a photograph of Inventive Example 1, and FIG. 1(b) is a photograph of Comparative Example 5.
FIG. 2 illustrates hardness distribution of a welded member according to an embodiment of the present disclosure, FIG. 2(a) illustrates hardness distribution of Inventive Example 1, and FIG. 2(b) illustrates hardness distribution of Comparative Example 5.
FIG. 3 is an Image Quality (IQ) and an Inverse Pole Figure (IPF) photograph of Inventive Example 1 according to an embodiment of the present disclosure observed with EBSD.
FIG. 4 is an Image Quality (IQ) and an Inverse Pole Figure (IPF) photograph of Comparative Example 5 according to an embodiment of the present disclosure observed with EBSD.

Best Mode for Invention

Hereinafter, a welded member having excellent welded portion fatigue strength according to an embodiment of the present disclosure will be described.

The welded member of the present disclosure may be obtained by overlapping a portion of two base materials and performing fillet welding using a welding material. In this case, the welded member may include a base material, a weld bead, and reinforcing welding metal of a root portion. The reinforcing welding metal in the root portion refers to an additional welding metal formed according to penetrability characteristics in which molten metal smoothly penetrates between an upper plate and a lower plate of the overlap joint portion during gas shield arc welding. The root portion reinforcing welding metal is present between a rear end portion of the weld bead and the overlapping portion of the base material. By forming the reinforcing welding metal in the root portion in this region, it is possible to effectively prevent a decrease in fatigue strength due to stress concentration at the weld root portion in a normal fatigue environment.

The base material preferably has a tensile strength of 780 MPa or more. As described above, by using the high-strength base material, it is possible to achieve weight reduction when applied to portions of car bodies used in the automobile field. Meanwhile, in the present disclosure, as long as it is a steel type having a high strength of 780 MPa or more as described above, the type is not particularly limited. However, it may preferably have an alloy composition similar to the alloy composition of the welding material applied to the present disclosure. For example, the base material may include, by weight%, 0.02 to 0.08% of C; 0.01 to 0.5% of Si; 0.8 to 1.8% of Mn; 0.01 to 0.1% of Al; 0.001 to 0.02% of P; 0.001 to 0.01% of S; 0.001 to 0.01% of N; 0.01 to 0.12% of Ti; 0.01 to 0.05% of Nb, and a remainder of Fe and unavoidable impurities. In addition, the base material may further include at least one of Mo, Cr, V, Ni, and B so that a total amount thereof is 1.5% by weight or less.

The base material may have a thickness of 1.0 to 2.0 mm. When the thickness of the base material is less than 1.0 mm, there may be a disadvantage in that it is difficult to exhibit sufficient arc force to form reinforcing welding metal of a root portion as well as being sensitive to melting during normal gas shield arc welding. On the other hand, when the thickness thereof exceeds 2.0 mm, a step of a thickness of the overlapping joint portion becomes excessive, so that it may be difficult to secure a weld bead toe angle for securing excellent fatigue strength

An interval of the overlapping portion between the two base materials (interval between upper and lower plates to be welded) may be 0.5 mm or less (including 0 mm). When the interval of the overlapping portion between the two base materials exceeds 0.5 mm, it may be difficult to secure a weld bead toe angle to achieve excellent fatigue strength within the appropriate base material thickness range. The interval of the overlapping portion between the two base materials refers to an interval between the upper and lower plates to be welded.

The weld bead toe angle is preferably 160° or more. The weld bead toe angle refers to an angle between the weld bead and a base material positioned in a lower portion of the two base materials at an end portion of the weld bead. A reason for controlling the weld bead toe angle is to relieve stress concentration of the weld part in a normal fatigue environment. That is, by controlling the weld bead toe angle to be high, an effect of significantly improving the fatigue strength compared to a conventional welded portion can be obtained, and if the weld bead toe angle is less than 160°, it may be difficult to sufficiently obtain the effect.

The weld bead may include a microstructure of at least one of acicular ferrite and bainite, and the acicular ferrite and bainite may have an average effective grain size of 5 $\mu$m or less. The acicular ferrite and bainite are microstructures advantageous for securing the strength and toughness of the welding metal, that is, the weld bead. In addition, in the present disclosure, it is possible to obtain an effect of simultaneously securing sufficient strength and toughness of the weld bead and the reinforcing welding metal in the root portion by refining the crystal grains of the acicular ferrite and bainite. If the average effective grain size of the acicular ferrite and bainite exceeds 5 $\mu$m, it is difficult to simultaneously secure sufficient strength and toughness of the welding metal as described above. Meanwhile, the above-mentioned average effective grain size refers to an average size of the grains converted from the number of grains per unit area.

Meanwhile, the welding material used during the welding, may include, by weight!, C: 0.06 to 0.1%, Si: 0.04 to 0.2%, Mn: 1.6 to 1.9%, Cr: 0.5 to 1.6%, Mo: 0.1 to 0.6%, a remainder of Fe, and other unavoidable impurities.

Carbon (C): 0.06 to 0.1%

Carbon (C) is a beneficial element for an action of stabilizing arc to atomize a volume. When a content of C is less than 0.06%, the volume becomes coarse and the arc becomes unstable, and an amount of spatter generation increases, and it may be difficult to secure sufficient strength of welding metal, which are disadvantages. On the other hand, when the content of C exceeds 0.1%, there may be a disadvantage in that viscosity of molten metal is lowered, resulting in a poor bead shape, as well as excessive hardening of the welding metal, thereby reducing toughness. A lower limit of the content of C is more preferably 0.062%, is even more preferably 0.065%, and is most preferably 0.07%. An upper limit of the content of C is more preferably 0.095%, is even more preferably 0.09%, and is most preferably 0.085%.

Silicon (Si): 0.04 to 0.2%

Silicon (Si) is an element (a deoxidation element) promoting deoxidation of molten metal during arc welding, and is effective in suppressing occurrence of blowholes. When a content of Si is less than 0.04%, there may be a disadvantage in that deoxidation becomes insufficient and blowholes is easily generated, and when the content of Si exceeds 0.2%, there may be a disadvantage in that non-conductive slag is generated remarkably, paint defects in a welded portion are caused and penetrability of molten metal is lowered due to a lack of surface activation of the welded portion due to excessive deoxidation. A lower limit of the content of Si is more preferably 0.045%, is even more preferably 0.05%, and is most preferably 0.06%. An upper limit of the content of Si is more preferably 0.15%, is even more preferably 0.1%, and is most preferably 0.08%.

Manganese (Mn): 1.6 to 1.9%

Manganese (Mn) is a deoxidizing element and is an element of promoting deoxidation of molten metal during arc welding and suppressing generation of blowholes. When a content of Mn is less than 1.6%, there may be a disadvantage in that deoxidation becomes insufficient within an appropriate range of the above-described content of Si, and blowholes are likely to be generated. When the content of Mn exceeds 1.9%, there may be a disadvantage in that viscosity of molten metal becomes excessively high, and a welding speed is high, the molten metal cannot flow properly into a welded site, resulting in a humped bead, which is likely to cause a poor bead shape. A lower limit of the content of Mn is more preferably 1.65%, is even more preferably 1.7%, and is most preferably 1.75%. An upper limit of the content of Mn is more preferably 1.87%, is even more preferably 1.85%, and is most preferably 1.8%.

Chromium (Cr): 0.5 to 1.6%

Chromium (Cr) is a ferrite stabilizing element, and is an element advantageous for securing hardenability to improve strength of welding metal. When a content of Cr is less than 0.5%, there may be a disadvantage in that it is difficult to secure sufficient strength of the welding metal, and when the content of Cr exceeds 1.6%, there may be a disadvantage in that brittleness of the welding metal is unnecessarily increased in some cases, making it difficult to sufficient toughness. A lower limit of the content of Cr is more preferably 0.6%, is even more preferably 0.7%, and is most preferably 0.8%. An upper limit of the content of Cr is more preferably 1.55%, is even more preferably 1.5%, and is most preferably 1.45%.

Molybdenum (Mo): 0.1 to 0.6%

Molybdenum (Mo) is a ferrite stabilizing element, and is an element advantageous for securing hardenability to improve strength of welding metal. When a content of Mo is less than 0.1%, there may be a disadvantage in that it is difficult to secure sufficient strength of welding metal within the above-described appropriate component range, and when the content of Mo exceeds 0.6%, there may be a disadvantage in that toughness of the welding metal is lowered in some cases. A lower limit of the content of Mo is more preferably 0.15%, is even more preferably 0.2%, and is most preferably 0.25%. An upper limit of the content of Mo is more preferably 0.55%, is even more preferably 0.52%, and is most preferably 0.5%.

In addition, the welding material may further include 0.015% or less of P, 0.005% or less of S, 0.10% or less of Ni, 0.25% or less of Cu, and 0.10% or less of Al.

Phosphorus (P): 0.015% or less

Phosphorus (P) is an element that is generally incorporated as an unavoidable impurity in steel, and is also an element included as a normal impurity in a solid wire for arc welding. When a content of P exceeds 0.015%, there may be a disadvantage in that high-temperature cracking of welding metal becomes excessive. The content of P is more preferably 0.014% or less, is even more preferably 0.012% or less, and is most preferably 0.01% or less.

Sulfur (S): 0.015% or less

Sulfur (S) is also generally incorporated as an unavoidable impurity in steel, and is an element usually included as a normal impurity in a solid wire for arc welding as well. When a content of S exceeds 0.01%, there may be a disadvantage in that toughness of welding metal deteriorates in some cases, and surface tension of molten metal is insufficient during welding , so that a molten portion flows downwardly excessively due to gravity during high-speed welding, resulting in a poor shape of the weld bead. The content of S is more preferably 0.008% or less, is even more preferably 0.006% or less, and is most preferably 0.005% or less.

Nickel (Ni): 0.40% or less

Nickel (Ni) is an element capable of improving strength and toughness of welding metal. However, when a content of Ni exceeds 0.40%, there may be a disadvantage in that it becomes sensitive to cracks within the above-described appropriate component range. The content of Ni is more preferably 0.30% or less, is even more preferably 0.20% or less, and is most preferably 0.10% or less.

Copper (Cu): 0.50% or less

Copper (Cu) is generally contained in about 0.02% as an impurity in steel constituting a wire, and in a solid wire for arc welding, a content of Cu may be determined mainly due to copper plating performed on a surface of the wire. Cu is an element capable of stabilizing feedability and conductivity of the wire. However, when the content of Cu exceeds 0.50%, there may be a disadvantage in that crack susceptibility of the welding metal is increased. The content of Cu is more preferably 0.45% or less, is even more preferably 0.40% or less, and is most preferably 0.30% or less.

Aluminum (Al): 0.20% or less

Aluminum (Al)is a deoxidizing element and is an element of promoting deoxidation of molten metal during arc welding and improving strength of welding metal. When a content of Al exceeds 0.20%, generation of Al-based oxides increase, so that there may be a disadvantage strength and toughness of the welding metal are deteriorated in the above-mentioned appropriate component range in some cases, and electrodeposition paint defects of a welded portion become sensitive due to non-conductive oxides. The content of Al is more preferably 0.15% or less, is even more preferably 0.12% or less, and is most preferably 0.10% or less.

Meanwhile, in the present disclosure, the type of the welding material is not particularly limited, but a solid wire or a metal cored wire may be preferably used. More preferably, a solid wire is used, and the solid wire is more advantageous for securing wire rigidity, so that it is possible to obtain an effect of improving penetrability of molten metal through securing excellent feedability and straightness of the wire during welding.

In the welded member of the present disclosure provided as described above, the weld bead and the reinforcing welding metal in the root portion may have an average Vickers hardness of 280 to 320 Hv and an average fatigue strength of 350 MPa or more, so that very excellent fatigue strength in the welded portion can be secured.

Hereinafter, a method for manufacturing a welded member having excellent welded portion fatigue strength according to an embodiment of the present disclosure will be described.

According to the present disclosure, the method for manufacturing the same may be performed by overlapping a portion of two base materials and performing fillet welding using a welding material. It is preferable to use gas shielded arc welding during the fillet welding.

In this case, it is preferable use a protective gas containing, by volume %, 5 to 10% of $CO_2$ and a balance of Ar during the welding. The $CO_2$ is a gas advantageous for securing penetrability of molten metal due to arc pinch force and surface activation by generating arc contraction by a dissociation reaction during arc welding. When the fraction of $CO_2$ is less than 5%, there is a disadvantage that a volume transfer of a wire is unstable during arc welding and penetrability of the molten metal may be poor, and when the fraction of $CO_2$ exceeds 10%, there is a disadvantage that the arc contraction increases and the penetrability increases, but it is difficult to secure a sufficient toe angle to ensure excellent fatigue characteristics of the welded portion.

In addition, it is preferable that a welding heat input (Q) defined by the following [Equation 1] during the welding satisfies $1.15t \leq Q \leq 1.6t$ (where, t is a thickness of a base material (mm), and an unit of Q is kJ/cm). If the welding heat input (Q) is less than 1.15t, there is a concern that strength and toughness of welding metal and a coarse grained heat-affected zone may be insufficient, and if the welding heat input (Q) exceeds 1.6t, there is a problem that not only insufficient strength of the welding metal and a decrease in strength of a welding heat-affected zone becomes excessive, but also back beads and melting easily occur in the welded portion, resulting in a defect.

$$[\text{Equation 1}] \quad Q = (I \times E) \times 0.048 / \text{u } 56$$

(However, in the [Equation 1], I, E, and u represent a welding current [A], a welding voltage [V], and a welding speed (cm/min), respectively).

The welded member of the present disclosure is a welded member having a welded portion obtained by welding two or more base materials using a welding material, in the welded member, it is possible to improve penetrability of molten metal by increasing arc pinch force by activating the surface of the welded portion by controlling deoxidation according to a chemical component and reducing the specific resistance of the welding wire. In particular, it is possible to prevent excessive deoxidation during arc welding by controlling the content of Si, which is a major deoxidation element among alloying components of the welding material. Meanwhile, since conventional gas-shielded arc welding is controlled by a constant voltage method, as the specific resistance of the welding wire, serving as a positive electrode of the flow of the arc current, decreases, the welding current capable of increasing the penetrability of molten metal, that is, the arc pinch force, increases. Accordingly, it is preferable that the welding material used during welding has a specific resistance (R) defined by the following [Equation 2] satisfies $0.5 \leq R \leq 1.1$. Meanwhile, when the specific resistance (R) is less than 0.5, not only the deoxidation of the molten metal during welding is insufficient, but also the specific resistance of the welding wire is too low, so that it has a disadvantage in that it is difficult to obtain a good weld bead due to a poor volume transfer at a tip of the wire, and when the specific resistance (R) exceeds 1.1, there is a disadvantage in that a sufficient arc pinch force is not exerted according to the above-described principle, and thus the penetrability of the molten metal is insufficient.

$$[Equation\ 2]\ R = [Si] + 0.25 \times ([Mn] + [Cr])$$

(However, in the [Equation 2], [Si], [Mn] and [Cr] represent each element content (wt%)).

Furthermore, it is preferable that X defined by the following [Equation 3] satisfies $0.6 \leq X \leq 3.4$. During arc welding of a thin plate targeted in the present disclosure, a phase transformation structure according to continuous cooling of a welded metal portion changes rapidly according to the above-mentioned value of X, and in this case, it is possible to secure sufficient strength and toughness of the welded metal portion by securing the acicular ferrite and bainite microstructures, which are typical low-temperature transformation phases generated according to the transformation caused by lattice deformation without diffusion. Accordingly, it is possible to realize excellent fatigue strength in the welded portion by securing a dense microstructure of the welded metal part together with a welded toe portion and reinforcing welding metal of a root portion formed smoothly as described above. In this case, nucleation of acicular ferrite transformation starts from complex oxides generated from micro metal elements contained in the welding base material and welding material, and in order to promote the transformation of the acicular ferrite phase, it is more effective when the $CO_2$ fraction of the welding shielding gas is 5-10 vol%. When an amount of oxygen generated according to a dissociation reaction of $CO_2$ during arc welding is excessive than the above-mentioned appropriate range, the number of oxides increases, but it cannot reach a critical oxide size for nucleation, so it is not easy to generate acicular ferrite phase transformation. Otherwise, the transformation of grain boundary ferrite, which is unfavorable to securing toughness, increases. Conversely, when the amount of oxygen is insufficient than the appropriate range, the hardenability increases due to the reduction of oxidation of hardenable elements contained in the steel material, which is a welding base material, and the welding wire, so that low-temperature transformation such as bainite and martensite occur predominantly rather than acicular ferrite transformation. In order to obtain all the effects of increasing the weld bead toe angle and increasing a phase fraction of acicular ferrite, a $CO_2$ fraction is preferably close to 5% by volume. In addition, as described above, by appropriately controlling the content of Si, which is a strong deoxidation element, among the chemical components of the welding material, it can be helpful for forming the composite oxide. In addition, when the Vickers hardness (Hv, load of 500gf, measured at 0.2 mm intervals) of the welded metal part including reinforcing welding metal of the root portion becomes 280 or more, it is possible to significantly improve the fatigue strength in the welded portion. Meanwhile, when the value of X is less than 0.6, there is a disadvantage that the martensitic phase transformation is mainly promoted and the brittleness of the welding metal increases. When the value of X exceeds 3.4, there is a disadvantage in that the strength of the welding metal is lowered due to lack of hardenability.

$$[Equation\ 3]\ X = 28 \times [Si]\ /\ [Mn]^2 - [Cr]\ /\ 3 + 4 \times [Mo]$$

(However, in the [Equation 3], [Si], [Mn], [Cr] and [Mo] represent each element content (wt%)).

Mode for Invention

Hereinafter, the present disclosure will be described in detail through Examples. However, the following Examples are only examples for explaining the present disclosure in more detail, and do not limit the scope of the present disclosure.

(Example 1)

After dissolving an ingot having an alloy composition illustrated in Table 1 below, a welding wire was prepared by annealing after being drawn at room temperature through hot rolling. Then, a Cu plating layer was formed on a surface of the wire, and at this time, it was plated so that a copper content is in a range of 0.12 to 0.50%, by mass% with respect to a total wire including a plating layer. Then, the copper-plated wire was drawn, and manufactured as a solid wire for welding having a diameter of 0.9 to 1.2 mm.

Using the solid wire for welding manufactured as described above, two Pickled & Oiled (PO) steel sheets having the alloy composition illustrated in Table 2 below were fillet welded (overlap joint welding) using the welding conditions illustrated in Table 3 below. In this case, tensile strength of the PO steel sheet was 780 MPa, average hardness thereof was 260 Hv, and a thickness thereof was 2.0 mm. During the welding, an interval between overlapping parts between the two base materials was fixed with by clamping to be 0.5 mm or less, and pulse MAG welding was performed under conditions of a wire protrusion length of 15 mm, a welding speed of 80cm/min, as an overlap joint portion.

For a welded member manufactured through the above-described welding, whether or not reinforcing welding metal in a root portion is formed, a weld bead toe angle, an average Vickers hardness and an average fatigue strength of the weld bead and the reinforcing welding metal of the root portion, and a microstructure and an average effective grain size thereof, were measured, and then results thereof were shown in Table 4 below.

Whether or not reinforcing welding metal in the root portion is formed was determined by the presence of additional welding metal between a rear end portion of the weld bead and an overlapping portion of the base material, that is, in a region beyond a molten boundary line (a boundary between the welding metal and the heat-affected zone).

The weld bead toe angle was measured as an outer angle formed by a lower plate reference plane of the welding base material, in contact with a normal line to a curved surface of the toe portion of the weld bead.

The average Vickers hardness of the weld bead and the reinforcing welding metal in the root portion was measured at an interval of 0.2 mm in a width direction using a Vickers hardness meter under a condition that a load was 500 gf, and then an average value thereof was measured.

The average fatigue strength of the weld bead and the reinforcing welding metal in the root portion was measured by taking a specimen from the welded portion, and then performing a fatigue test, so that a maximum additional load in which a fatigue life satisfies $2 \times 10^6$ Cycles as fatigue strength. In this case, the fatigue strength was described as the average value for three specimens. In the fatigue test, fatigue life (Cycles) of the welded portion was measured using a tensile-tensile high cycle fatigue test for each load, and in this case, a ratio of a minimum load and a maximum load was 0.1, a repetitive load frequency was 15Hz, and in addition, a fatigue life corresponding to converted strength Mpa was derived by dividing load kN by an area according to a width and a thickness of each specimen.

The microstructure was observed with an optical microscope after micro-polishing a cross-sectional structure of the welded member and etching with a nital solution. In addition, Kikuchi patterns were analyzed through electron backscattered diffraction (EBD), so that image quality (IQ) and inverse pole figure (IPF) maps were obtained visualizing grain boundaries and grain orientation information.

The average effective grain size was measured by classifying grain by referring the IQ and IFF map of EBSD along with a microstructure photograph observed with the optical microscope described above, and then calculating an average size of grains converted from the number of grains per unit area.

[Table 1]

| Wire No. | Alloy composition (weight %) | | | | | | | | | | |
|---|---|---|---|---|---|---|---|---|---|---|---|
| | C | Si | Mn | Cr | Mo | P | S | Ni | Cu | Al | Fe |
| 1 | 0.07 | 0.06 | 1.70 | 1.37 | 0.49 | 0.004 | 0.001 | 0.02 | 0.12 | 0.001 | Remai nder |
| 2 | 0.09 | 0.86 | 1.46 | 0.04 | 0.003 | 0.015 | 0.01 | 0.02 | 0.18 | 0.001 | Remai nder |

[Table 2]

| Alloy composition (weight %) | | | | | | | | | | |
|---|---|---|---|---|---|---|---|---|---|---|
| C | Si | Mn | Al | P | S | N | Ti | Nb | Cr | Fe |
| 0.07 | 0.3 | 1.6 | 0.03 | 0.009 | 0.001 | 0.001 | 0.1 | 0.015 | 0.7 | Remain der |

[Table 3]

| Classif ication | Wire No. | Protective gas (volume %) | Welding heat input (Q) (kJ/cm) | Welding material (R) | Welding material ( X) |
|---|---|---|---|---|---|
| Compara tive Example 1 | 1 | 3%$CO_2$+Ar | 3.2 | 0.83 | 2.08 |

(continued)

| Classification | Wire No. | Protective gas (volume %) | Welding heat input (Q) (kJ/cm) | Welding material (R) | Welding material (X) |
|---|---|---|---|---|---|
| Inventive Example 1 | 1 | 5%$CO_2$+Ar | 2.5 | 0.83 | 2.08 |
| Comparative Example 2 | 1 | 15%$CO_2$+Ar | 2.8 | 0.83 | 2.08 |
| Comparative Example 3 | 1 | 10%$CO_2$+Ar | 2.0 | 0.83 | 2.08 |
| Inventive Example 2 | 1 | 10%$CO_2$+Ar | 3.0 | 0.83 | 2.08 |
| Comparative Example 4 | 1 | 8%$CO_2$+Ar | 3.4 | 0.83 | 2.08 |
| Comparative Example 5 | 2 | 5%$CO_2$+Ar | 2.6 | 1.24 | 11.3 |
| R = [Si] + 0.25 × ([Mn] + [Cr])<br>X = 28 × [Si] / [Mn]$^2$ - [Cr] / 3 + 4 × [Mo] | | | | | |

[Table 4]

| Classification | Whether or not reinforcing welding metal of root portion is formed | Toe angle of weld bead (°) | Microstructure | Average effective grain size ($\mu$m) | Weld bead and reinforcing welding metal of root portion | |
|---|---|---|---|---|---|---|
| | | | | | Average Vickers hardness (Hv) | Average fatigue strength (MPa) |
| Comparative Example 1 | Not formed | 162 | AF+B | 5.0 | 284 | 300 |
| Inventive Example 1 | Formed | 164 | AF+B | 3.2 | 292 | 360 |
| Comparative Example 2 | Formed | 155 | AF+B+GF | 3.8 | 281 | 280 |
| Comparative Example 3 | Formed | 158 | B+GF | 3.5 | 302 | 290 |
| Inventive Example 2 | Formed | 160 | AF+B | 4.6 | 287 | 350 |
| Comparative Example 4 | Formed | 156 | AF+GF | 6.7 | 272 | 260 |
| Comparative Example 5 | Not formed | 157 | PF+B | 8.1 | 268 | 120 |
| AF: Acicular Ferrite, B: Bainite, GF: Grain boundary Ferrite, PF: Polygonal Ferrite | | | | | | |

As can be seen from Tables 1 to 4, the welded member manufactured to satisfy the manufacturing conditions proposed by the present disclosure has excellent an average Vickers hardness and average fatigue strength, compared to the base material, by securing the weld bead toe angle, the microstructure, and the average effective grain size to be obtained by the present disclosure.

On the other hand, Comparative Example 1 illustrates a level, lower than a $CO_2$ fraction of a protective gas proposed by the present disclosure, so that reinforcing welding metal in a root portion is not formed, so it can be seen that the average fatigue strength is at a low level.

Comparative Example 2 illustrates a level, exceeding a $CO_2$ fraction of protective gas proposed by the present disclosure, so that a weld bead toe angle is small, so it can be seen that the average fatigue strength is at a low level.

Comparative Example 3 illustrates a level, lower than a welding heat input proposed by the present disclosure, so that it can be seen that an average Vickers hardness is high as hardenability increases, but an average fatigue strength thereof is low at a low level as the weld bead toe angle decreases.

Comparative Example 4 illustrates a level, exceeding a welding heat input proposed by the present disclosure, so that it can be seen that an average Vickers hardness is low as the hardenability decreases, but an average effective grain size increases, and a weld bead toe angle is small, so that it can be seen that the average fatigue strength is at a low level.

In Comparative Example 5, as the R and X values of the welding material proposed by the present disclosure are not satisfied, the reinforcing welding metal in the root portion is not formed as well as the weld bead toe angle is small, so that it can be seen that the average Vickers hardness and the average fatigue strength are at a low level.

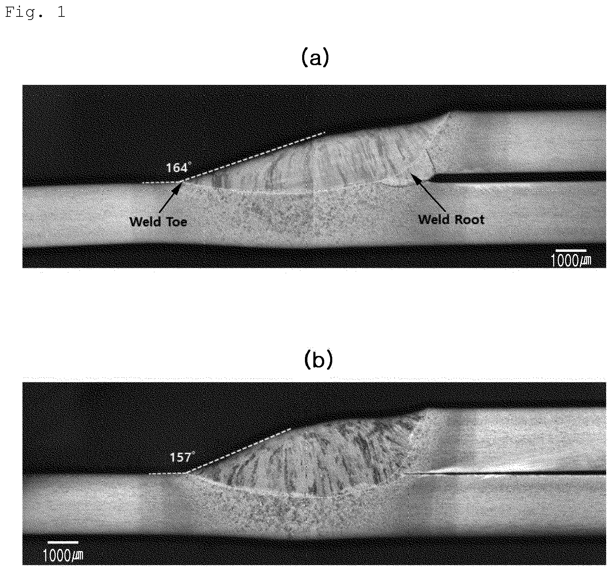

FIG. 1 is a photograph observed with an optical microscope after etching a cross-sectional structure of a welded member with a nital solution, FIG. 1(a) is a photograph of Inventive Example 1, and FIG. 1(b) is a photograph of Comparative Example 5. As can be seen from FIG. 1, in the case of Inventive Example 1, a weld bead toe angle is very smooth as 164°, and it can be seen that formation of reinforcing welding metal in a root portion is remarkable due to an increase in penetrability of molten metal. On the other hand, in the case of Comparative Example 5, the weld bead toe angle bead was 157°, and a radius of curvature was relatively small, which is disadvantageous to fatigue resistance, and it can be seen that the reinforcing welding metal in the root portion is not formed at all.

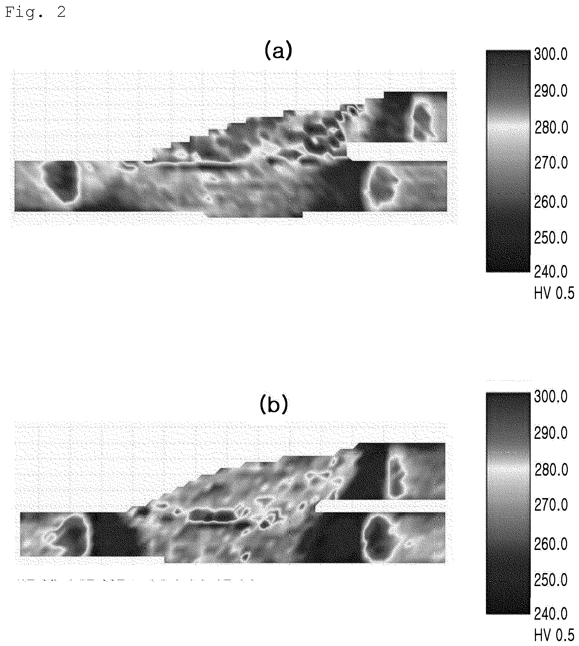

FIG. 2 illustrates a hardness distribution of the welded member, FIG. 2(a) illustrates a hardness distribution of Invention Example 1, and FIG. 2(b) illustrates a hardness distribution of Comparative Example 5. As can be seen from FIG. 2, in the case of Inventive Example 1, hardness of welding metal portion including reinforcing welding metal in the root portion was at a level of 280 to 320 Hv, which was higher than 260Hv, which is average hardness of the base material, but in the case of Comparative Example 1, it can be seen that it is only at a level similar to the average hardness of the base material.

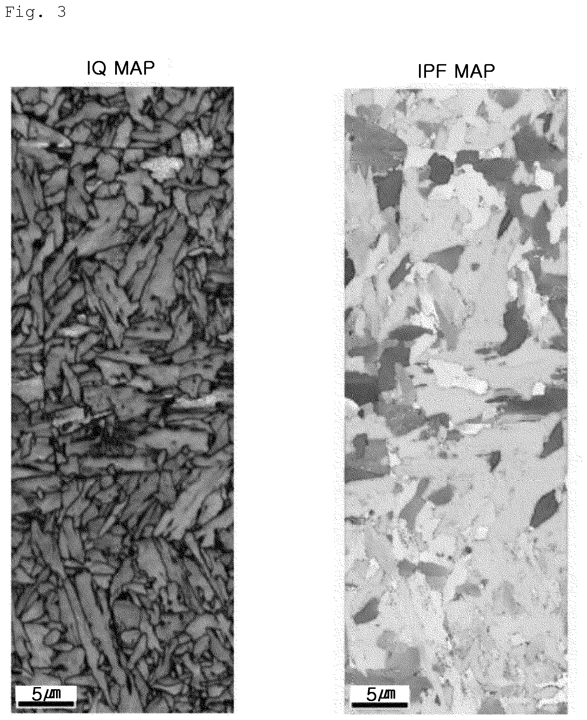

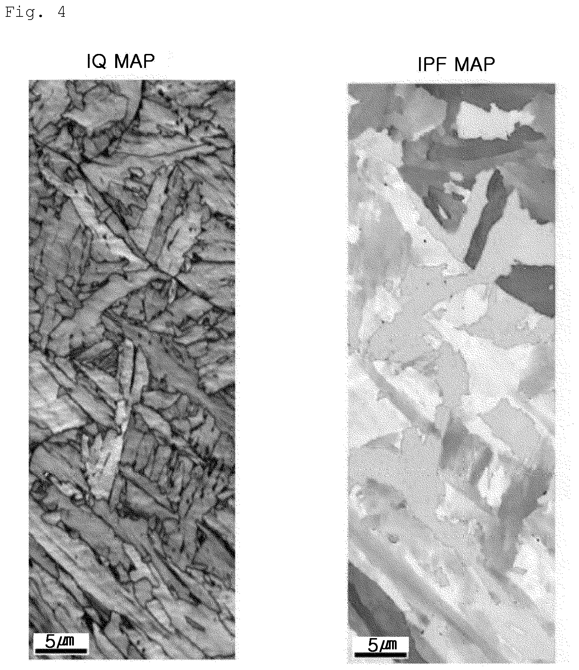

FIGS. 3 and 4 are Image Quality (IQ) and Inverse Pole Figure (IPF) photographs of Inventive Example 1 and Comparative Example 5, respectively, observed with EBSD. As shown in FIGS. 3 and 4, it can be seen that Inventive Example 1 has a relatively dense microstructure compared to Comparative Example 5.

(Example 2)

In order to evaluate a fatigue life of a welded portion, a specimen was for a fatigue test was prepared from the welded member corresponding to Inventive Example 1 and Comparative Example 5 described in Example 1. In this case, after cutting the base material to a width of 150 mm and a length of 120 mm, a width of the overlapping portion was 25 mm, so that both sides of the joint portion were welded by about 100 mm. Thereafter, after taking a specimen having a width of 50 mm from a central portion of the welded member, a specimen for a fatigue test was prepared by spot welding to both ends of the specimen with a step difference of the overlapping portion, that is, a compensator equal to the thickness of the base material, with a width of 50 mm and a length of 40 mm, so that a uniaxial load was applied. Then, a tensile-tensile high-cycle fatigue test for each load was performed to measure the fatigue life (Cycles) of the welded portion, and the results were shown in Table 5 below. In this case, a ratio of the minimum load and the maximum load was 0.1, and a repetitive load frequency was 15 Hz. In addition, the fatigue life corresponding to the converted strength (MPa) was derived by dividing the load (kN) by an area according to the width and thickness of each specimen, and in this case, a maximum added load at which the fatigue life satisfies $2 \times 10^6$ Cycles was defined as fatigue strength.

[Table 5]

| No. | Maximum load (MPa) | Minimum load (MPa) | Fatigue life (Cycles) | |
|-----|--------------------|--------------------|------------------------|---|
| | | | Inventive Example 1 | Comparative Example 5 |
| 1 | 420 | 42 | 33,078 | Not measured |
| 2 | 400 | 40 | 45,103 | Not measured |

(continued)

| No. | Maximum load (MPa) | Minimum load (MPa) | Fatigue life (Cycles) | |
|---|---|---|---|---|
| | | | Inventive Example 1 | Comparative Example 5 |
| 3 | 360 | 36 | 2,000,000 | Not measured |
| 4 | 340 | 34 | 2,000,000 | Not measured |
| 5 | 320 | 32 | 2,000,000 | 5,937 |
| 6 | 300 | 30 | 2,000,000 | 76,844 |
| 7 | 240 | 24 | 2,000,000 | 112,197 |
| 8 | 220 | 22 | 2,000,000 | 205,860 |
| 9 | 180 | 18 | 2,000,000 | 678,821 |
| 10 | 120 | 12 | 2,000,000 | 2,000,000 |

As can be seen from Table 5 above, Inventive Example 1 illustrates a fatigue strength in 360 MPa, which is three times the fatigue strength in 120 MPa, which is the fatigue strength in Comparative Example 5. Meanwhile, in the case of Comparative Example 5, the fatigue life showed a sharp decrease when a maximum load was 180 MPa or more. In addition, when the maximum load was 320 MPa or more, fatigue failure occurred in the root portion, not the toe portion of the weld bead, whereas the welded portion of Inventive Example 1 had excellent fatigue strength that did not occur fatigue failure at all to the toe portion and the root portion up to 360 MPa.

**Claims**

1.  A welded member obtained by overlapping a portion of two base materials and performing fillet welding using a welding material, the welded member having excellent welded portion fatigue strength thereof,
    the welded member, comprising:

    a base material, a weld bead and reinforcing welding metal of a root portion,
    wherein the base material has a tensile strength of 780MPa or more,
    the weld bead has a toe angle of 160° or more, and
    the weld bead and the reinforcing welding metal in the root portion have an average Vickers hardness of 280 to 320 Hv and an average fatigue strength of 350 MPa or more.

2.  The welded member having excellent welded portion fatigue strength of claim 1,

    wherein the base material comprises, by wt%,
    0.02 to 0.08% of C, 0.01 to 0.5% of Si, 0.8 to 1.8% of Mn, 0.01 to 0.1% of Al, 0.001 to 0.02% of P, 0.001 to 0.01% of S, 0.001 to 0.01% of N, 0.01 to 0.12% of Ti, 0.01 to 0.05% of Nb, and a remainder of Fe and other unavoidable impurities.

3.  The welded member having excellent welded portion fatigue strength of claim 2,

    wherein the base material further comprises,
    at least one of Mo, Cr, V, Ni, and B so that a total amount thereof is 1.5% by weight or less.

4.  The welded member having excellent welded portion fatigue strength of claim 1, wherein the base material has a thickness of 1.0 to 2.0 mm.

5.  The welded member having excellent welded portion fatigue strength of claim 1, wherein an interval of an overlapping portion between the two base materials is 0.5 mm or less (including 0 mm).

6.  The welded member having excellent welded portion fatigue strength of claim 1, wherein the weld bead comprises a microstructure of at least one of acicular ferrite and bainite, the acicular ferrite and bainite having an average effective grain size of 5 μm or less.

7. The welded member having excellent welded portion fatigue strength of claim 1,

    wherein the welding material comprises, by weight%,
    0.06 to 0.1% of C, 0.04 to 0.2% of Si, 1.6 to 1.9% of Mn, 0.5 to 1.6% of Cr, 0.1 to 0.6% of Mo, and a remainder of Fe and other unavoidable impurities.

8. The welded member having excellent welded portion fatigue strength of claim 7,

    wherein the welding material further comprises, by weight %,
    0.015% or less of P, 0.01% or less of S, 0.40% or less of Ni, 0.50% or less of Cu, and 0.20% or less Al.

9. The welded member having excellent welded portion fatigue strength of claim 1,
    wherein the welding material is a solid wire or a metal cored wire.

10. A method for manufacturing a welded member obtained by overlapping a portion of two base materials and performing fillet welding using a welding material, the welded member having excellent welded portion fatigue strength thereof,

    in the method,
    wherein the base material has a tensile strength of 780 MPa or more,
    during the welding, a protective gas containing, by volume %, 5 to 10% of $CO_2$ and a remainder of Ar is used,
    during the welding, a welding heat input (Q) defined by the following [Equation 1] satisfies $1.15t \leq Q \leq 1.6t$ (where, t is a thickness of a base material (mm), and an unit of Q is kJ/cm), and
    for the welding material, a specific resistance (R) defined by the following [Equation 2] satisfies $0.5 \leq R \leq 1.1$, and X defined by the following [Equation 3] satisfies $0.6 \leq X \leq 3.4$,

$$[Equation\ 1]\ Q = (I \times E) \times 0.048\ /υ$$

$$[Equation\ 2]\ R = [Si] + 0.25 \times ([Mn] + [Cr])$$

$$[Equation\ 3]\ X = 28 \times [Si]\ /\ [Mn]2 - [Cr]\ /\ 3 + 4 \times [Mo]$$

    (However, in the [Equation 1], I, E, and u represent a welding current [A], a welding voltage [V], and a welding speed (cm/min), respectively, and in the [Equation 2] and [Equation 3], [Si], [Mn], [Cr] and [Mo] represent each element content (by wt%)).

11. The method for manufacturing a welded member having excellent welded portion fatigue strength of claim 10,

    wherein the base material comprises, by weight %,
    0.02 to 0.08% of C, 0.01 to 0.5% of Si, 0.8 to 1.8% of Mn, 0.01 to 0.1% of Al, 0.001 to 0.02% of P, 0.001 to 0.01% of S, 0.001 to 0.01% of N, 0.01 to 0.12% of Ti, 0.01 to 0.05% of Nb, and a remainder of Fe and other unavoidable impurities.

12. The method for manufacturing a welded member having excellent welded portion fatigue strength of claim 11, wherein the base material further comprises,
    at least one of Mo, Cr, V, Ni, and B so that a total amount thereof is 1.5% by weight or less.

13. The method for manufacturing a welded member having excellent welded portion fatigue strength of claim 10, wherein the welding material comprises, by weight %,
    0.06 to 0.1% of C, 0.04 to 0.2% of Si, 1.6 to 1.9% of Mn, 0.5 to 1.6% of Cr, 0.1 to 0.6% of Mo, and a remainder of Fe and other unavoidable impurities.

**14.** The method for manufacturing a welded member having excellent welded portion fatigue strength of claim 13,

wherein the welding material further comprises,
0.015% or less of P, 0.01% or less of S, 0.40% or less of Ni, 0.50% or less of Cu, and 0.20% or less of Al.

**15.** The method for manufacturing a welded member having excellent welded portion fatigue strength of claim 10, wherein the welding material is a solid wire or a metal cored wire.

Fig. 1

(a)

(b)

Fig. 2

(a)

(b)

Fig. 3

IQ MAP

IPF MAP

Fig. 4

IQ MAP

IPF MAP

<div align="center">INTERNATIONAL SEARCH REPORT</div>

| International application No. |
|---|
| **PCT/KR2021/018413** |

**A. CLASSIFICATION OF SUBJECT MATTER**

**B23K 26/242**(2014.01)i; **B23K 35/30**(2006.01)i; **B23K 35/02**(2006.01)i; **C22C 38/00**(2006.01)i; **C22C 38/02**(2006.01)i; **C22C 38/04**(2006.01)i; **C22C 38/06**(2006.01)i; **C22C 38/14**(2006.01)i; **C22C 38/58**(2006.01)i

According to International Patent Classification (IPC) or to both national classification and IPC

**B. FIELDS SEARCHED**

Minimum documentation searched (classification system followed by classification symbols)

B23K 26/242(2014.01); B23K 103/04(2006.01); B23K 31/02(2006.01); B23K 35/24(2006.01); B23K 35/30(2006.01); B23K 9/02(2006.01); B23K 9/04(2006.01); B23K 9/10(2006.01); B23K 9/173(2006.01); C22C 38/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용접부재(welded member), 피로강도(fatigue strength), 용접부(welded zone), 인장강도(tensile strength), 토우각(tow angle), 루트부(root zone), 비커스 경도(Vickers hardness)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0077325 A (POSCO) 04 July 2016 (2016-07-04)<br>See paragraphs [0012]-[0034], claim 4 and figures 1-5. | 1-9 |
| A | | 10-15 |
| Y | KR 10-2012-0002935 A (KABUSHIKI KAISHA KOBE SEIKO SHO (KOBE STEEL, LTD.)) 09 January 2012 (2012-01-09)<br>See figure 4. | 1-9 |
| Y | JP 2013-220431 A (KOBE STEEL LTD.) 28 October 2013 (2013-10-28)<br>See paragraphs [0011], [0014], [0028] and [0040] and table 1. | 2-3,6-9 |
| A | KR 10-2018-0074826 A (POSCO) 04 July 2018 (2018-07-04)<br>See claims 1-12 and figures 1-6. | 1-15 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 March 2022** | **08 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/018413** |

**C.      DOCUMENTS CONSIDERED TO BE RELEVANT**

| Category* | Citation of document, with indication, where appropriate, of the relevant passages | Relevant to claim No. |
|---|---|---|
| A | JP 2007-289965 A (KOBE STEEL LTD.) 08 November 2007 (2007-11-08)<br>    See abstract and claims 1-5. | 1-15 |

Form PCT/ISA/210 (second sheet) (July 2019)

**INTERNATIONAL SEARCH REPORT**
**Information on patent family members**

International application No.

**PCT/KR2021/018413**

| Patent document cited in search report | | | Publication date (day/month/year) | Patent family member(s) | | | Publication date (day/month/year) |
|---|---|---|---|---|---|---|---|
| KR | 10-2016-0077325 | A | 04 July 2016 | KR | 10-1639905 | B1 | 15 July 2016 |
| KR | 10-2012-0002935 | A | 09 January 2012 | CN | 102310254 | A | 11 January 2012 |
| | | | | CN | 102310254 | B | 19 March 2014 |
| | | | | EP | 2402103 | A1 | 04 January 2012 |
| | | | | EP | 2402103 | B1 | 17 August 2016 |
| | | | | JP | 2012-011429 | A | 19 January 2012 |
| | | | | JP | 5450293 | B2 | 26 March 2014 |
| | | | | US | 2012-0003035 | A1 | 05 January 2012 |
| | | | | US | 9457416 | B2 | 04 October 2016 |
| JP | 2013-220431 | A | 28 October 2013 | JP | 5909143 | B2 | 26 April 2016 |
| KR | 10-2018-0074826 | A | 04 July 2018 | CN | 110839341 | A | 25 February 2020 |
| | | | | EP | 3808488 | A1 | 21 April 2021 |
| | | | | JP | 2020-528006 | A | 17 September 2020 |
| | | | | KR | 10-2020515 | B1 | 11 September 2019 |
| | | | | US | 2021-0341004 | A1 | 04 November 2021 |
| | | | | WO | 2019-245063 | A1 | 26 December 2019 |
| JP | 2007-289965 | A | 08 November 2007 | JP | 4857015 | B2 | 18 January 2012 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013220431 A
- JP 2014014831 A
- JP 2014004609 A
- KR 1020190103244